# EUROPÄISCHE PATENTANMELDUNG

(11) **EP 3 960 546 A1**
(43) Veröffentlichungstag der Anmeldung: **02.03.2022**
(21) Anmeldenummer: 21193550.7
(22) Anmeldetag: 27.08.2021
(51) Int. Cl.: B60R 16/03

(54) **FREIZEITFAHRZEUG, INSBESONDERE WOHNMOBIL ODER WOHNWAGEN, MIT EINEM STEUERUNGSMODUL**

(30) Priorität: 27.08.2020 DE 102020122495
(71) Anmelder: Niesmann+Bischoff GmbH, 56751 Polch (DE)
(72) Erfinder: Kinderknecht, Eduard, 56220 Kettig (DE)
(74) Vertreter: Waller, Stefan

(57) **Zusammenfassung**

Freizeitfahrzeug (1), insbesondere Wohnmobil oder Wohnwagen, mit einer elektrischen Einrichtung (2), die insbesondere für eine elektrische Innen- und/oder Außenbeleuchtung (3) dient, wobei die elektrische Einrichtung (2) mehrere Anschlussstellen (4, 5, 6, 7) und mehrere Betätigungselemente (12, 13) umfasst, wobei ein zentrales Steuerungsmodul (16) vorgesehen ist, wobei das zentrale Steuerungsmodul (16) mehrere Eingänge (12', 13') und mehrere Ausgänge (4', 5', 6', 7') aufweist, wobei die Betätigungselemente (12, 23) zumindest mittelbar mit den Eingängen (12', 13') des zentralen Steuerungsmoduls (16) verbunden sind und wobei die Anschlussstellen (4, 5, 6, 7) zumindest mittelbar mit den Ausgängen (4', 5', 6', 7') des zentralen Steuerungsmoduls (16) verbunden sind.

## Beschreibung

Die Erfindung betrifft ein Freizeitfahrzeug, insbesondere ein Wohnmobil oder einen Wohnwagen, mit einer elektrischen Einrichtung, die insbesondere für eine elektrische Innenbeleuchtung für das Freizeitfahrzeug dient.

Im Caravanbereich werden zur Lichtsteuerung hauptsächlich mechanische Schalter oder Tastersysteme mit Relais eingesetzt. Denkbar ist es auch, dass elektrische Einrichtungen und Sicherungen sowie gegebenenfalls auch elektronische Komponenten hierbei im Fahrzeug verteilt sind. Speziell Sicherungen können verteilt und damit schlecht zugänglich sein.

Bestehende elektronische Module zur Lichtsteuerung sind hierbei nur für eine Funktion bestimmt. Dadurch sind gegebenenfalls eine Vielzahl verschiedener Module im Fahrzeug verbaut.

Dabei ergeben sich folgende Nachteile: Es ist eine Vielzahl von Modulen erforderlich. Mit einer Hauptsicherung werden mehrere Stromkreise für die Beleuchtung abgesichert. Dadurch, dass an einem Stromkreis verschiedene Leuchtmittel angeschlossen sind, benötigt man viele verschiedene zusätzliche Sicherungen (jeweils angepasst auf das Leuchtmittel), die im Fahrzeug verteilt sind. Nachteile dadurch sind die komplizierte Montage und Reparatur. Hardwareseitig sind die Lichtfunktionen festgelegt. Ein Schalter ist z. B. mit einem oder mehreren Leuchtmitteln fest verdrahtet. Eine Änderung der Funktion ist nur durch Änderung der Hardware möglich.

Der vorliegenden Erfindung liegt die Aufgabe zugrunde, ein Freizeitfahrzeug anzugeben, das verbessert ausgestaltet ist.

Diese Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird durch ein Freizeitfahrzeug, insbesondere Wohnmobil oder Wohnwagen, mit einer elektrischen Einrichtung, die insbesondere für eine elektrische Innen- und/oder Außenbeleuchtung dient, gelöst, wobei die elektrische Einrichtung mehrere Anschlussstellen und mehrere Betätigungselemente umfasst, wobei ein zentrales Steuerungsmodul vorgesehen ist, wobei das zentrale Steuerungsmodul mehrere Eingänge und mehrere Ausgänge aufweist, wobei die Betätigungselemente, zumindest mittelbar mit den Eingängen des zentralen Steuerungsmoduls verbunden sind und wobei die Anschlussstellen zumindest mittelbar mit den Ausgängen des zentralen Steuerungsmoduls verbunden sind.

Vorteilhaft ist es, dass das Steuerungsmodul softwaremäßig so flexibel programmiert werden kann, dass ein Eingang jeden beliebigen Ausgang bzw. beliebige Ausgänge ansteuern kann. Das heißt, einem Betätigungselement, das als Schalter oder Taster ausgebildet sein kann, können softwaremäßig beliebige Funktionen zugewiesen werden. Das Steuerungsmodul kann für verschiedene, insbesondere alle, Baureihen des Freizeitfahrzeugs dann nur durch Softwareänderung einsetzbar sein.

Hierbei ist es vorteilhaft, dass eine Vielzahl von Funktionen in einem kompakten, prozessorgesteuerten Gerät gebündelt werden, die frei programmierbar sind. Bei einer bevorzugten Ausgestaltung sind 25 Eingänge und 25 Ausgänge, die individuell programmiert und abgesichert werden können, vorgesehen. Jeder Ausgang kann mit verschiedenen Funktionen belegt werden, beispielsweise Zeitsteuerung und/oder Verzögerung und/oder Lichtintensität und/oder Ein- und Ausschaltverzögerung und/oder Bewegungsmelderfunktion.

Ferner können in vorteilhafter Weise ein oder mehrere der folgenden Funktionen realisiert werden: Automatisierte Schaltfunktionen, so dass z. B. beim Öffnen von Klappen und Türen das Licht automatisch angeht. Dies kann auch manuell bzw. zeitgesteuert werden. Lichtszenarien mit individuell programmierbaren Dimmkurven, die dadurch an unterschiedliche Leuchtmittel angepasst werden können. Die Funktion, dass mehrere Taster einen Ausgang schalten, was eine Wechsel- bzw. Kreuzschaltung ersetzt. Das Steuerungsmodul kann über eine Busanbindung verfügen und z. B. mit Hilfe einer intelligenten Steuereinheit angesteuert werden. Bei dieser Funktion kann eine App-Bedienung möglich sein. Das neue Lichtmodul kann für alle Baureihen nur durch Softwareänderung einsetzbar sein.

Insbesondere durch eine freie Programmierbarkeit in Kombination mit einer beispielsweise seriellen Anbindung über eine intelligente Steuereinheit können sich die folgenden Vorteile ergeben: Das Steuerungsmodul kann als kompaktes Gerät realisiert werden. Es können z.B. jeweils 25 frei programmierbare Ein- und Ausgänge realisiert werden. Eine Steuerung über eine App ist beispielsweise über ein mobiles Gerät möglich. Eine Ansteuerung kann über einen Bus ermöglicht werden.

Bei einer vorteilhaften Ausgestaltung ist eine freie Programmierung von Lichtintensität, Zeit, Verzögerung, Bewegungsmeldung und Dimmkurven möglich Es ergibt sich eine einfache Montage und Wartung, da alles an einer zentrale Position realisiert werden kann, so dass keine verteilten Module und Sicherungen im Fahrzeug erforderlich sind. Außerdem kann eine Korrektur von elektronischen Störfaktoren über eine programmierbare Dimmkurve erfolgen. Beim Einschalten von Wechselrichter, Lüfter oder Lichtmaschine entstehen Spannungsspitzen, die zum Flackern des Lichts führen können. Die programmierbare Dimmkurve kann an die Störfaktoren in jeweiligen Fahrzeug angepasst werden.

Das Steuerungsmodul kann auch zur Steuerung von Funktionen verwendet werden die nichts mit der Beleuchtung zu tun habe. Z. B. kann eine Steuerung elektrisch angetriebener Komponenten, wie einer Markise, eines Küchenlift, eines elektrischen Hubbetts oder einer Trittstufe, erfolgen.

Vorteilhaft ist es, dass mehrere der Betätigungselemente als Taster ausgebildet sind, die durch einen Benutzer betätigbar sind, und dass das zentrale Steuerungsmodul so ausgebildet ist, dass für ein oder mehrere der als Taster ausgebildeten Betätigungselemente jeweils eine Dimmfunktion vorgebbar ist. Hierdurch ist insbesondere eine verbesserte Nutzung eines Leuchtmittels möglich, ohne dass zusätzliche Bauteile erforderlich sind.

Vorteilhaft ist es, dass das zentrale Steuerungsmodul als programmierbares Steuerungsmodul ausgebildet ist und/oder dass das Steuerungsmodul so ausgebildet ist, dass durch eine Programmierung des Steuerungsmoduls für zumindest einen Ausgang entsprechend der Dimmfunktion eine Dimmkurve programmierbar ist, die insbesondere an eine Anpassung der Dimmkurve an ein an dem Ausgang angeschlossenes Leuchtmittel ermöglicht. Hierdurch ist insbesondere eine Anpassung an das angeschlossene Leuchtmittel möglich.

Vorteilhaft ist es, dass zumindest ein Teil der als Taster ausgebildeten Betätigungselemente in einem Frontbereich und/oder an einem Bad und/oder an einer Toilette und/oder an einem Bett und/oder an einer Aufbautür und/oder an einer Garage, insbesondere Heckgarage, und/oder an einem Staufach angeordnet sind. Hierdurch kann eine hohe Integration ermöglicht werden.

Vorteilhaft ist es, dass zumindest eines der Betätigungselemente als Kontaktelement ausgebildet ist und dass das zentrale Steuerungsmodul so ausgebildet ist, dass für ein oder mehrere der als Kontaktelemente ausgebildeten Betätigungselemente jeweils eine Kontaktfunktion vorgebbar ist. Somit können auch solche Betätigungen zentral verarbeitet werden.

Vorteilhaft ist es, dass zumindest ein Teil der als Kontaktelemente ausgebildeten Betätigungselemente an zumindest einer Stauraumklappe und/oder an einer Garagenklappe und/oder an zumindest einer sonstigen Klappe und/oder an einer Aufbautür und/oder an zumindest einer Fahrhaustür und/oder an zumindest einer sonstigen Tür angeordnet ist und dass das zentrale Steuerungsmodul so ausgebildet ist, dass für ein oder mehrere der als Kontaktelemente ausgebildeten Betätigungselemente entsprechend der Kontaktfunktion ein offener und/oder geschlossener Zustand der Stauraumklappe beziehungsweise der Garagenklappe beziehungsweise der sonstigen Klappe beziehungsweise der Aufbautür beziehungsweise der Fahrhaustür beziehungsweise der sonstigen Tür erfassbar ist. Hierdurch ergibt sich eine hohe Integration.

Vorteilhaft ist es, dass das zentrale Steuerungsmodul so ausgebildet ist, dass in Abhängigkeit von dem erfassten offenen und/oder geschlossenen Zustand der Stauraumklappe beziehungsweise der Garagenklappe beziehungsweise der sonstigen Klappe beziehungsweise der Aufbautür beziehungsweise der Fahrhaustür beziehungsweise der sonstigen Tür zumindest einer der Ausgänge schaltbar ist. Insbesondere kann somit auf zusätzliche Komponenten verzichtet werden und gegebenenfalls eine umfängliche Verarbeitung in genau einem Steuerungsmodul realisiert werden.

Vorteilhaft ist es, dass das zentrale Steuerungsmodul so ausgebildet ist, dass in Abhängigkeit von einer Uhrzeit zumindest einer der Ausgänge schaltbar ist. Hierdurch können weitere Funktionen programmiert werden.

Vorteilhaft ist es, dass das zentrale Steuerungsmodul so ausgebildet ist, dass zumindest einer der Ausgänge in Abhängigkeit von mehreren Betätigungselementen schaltbar ist. Hierdurch kann insbesondere auf Wechselschalter verzichtet werden und generell eine Ansteuerung über Taster erfolgen.

Vorteilhaft ist es, dass ein Teil der Anschlussstellen für Leuchtmittel dient und dass zumindest ein anderer Teil der Anschlussstellen für elektrisch angetriebene Einrichtungen, insbesondere für eine Markise und/oder einen Küchenlift und/oder ein elektrisches Hubbett und/oder eine verstellbare Trittstufe, dient. Hierdurch kann die Ansteuerung für weitere elektrische Einrichtungen integriert werden.

Vorteilhaft ist es, dass das zentrale Steuerungsmodul eine Bus-Verbindung aufweist, über die insbesondere eine Verbindung mit einem Datenbus und/oder einem mobilen Gerät ermöglicht ist. Dadurch kann beispielsweise ein Ansprechen von einer Bedienzentrale des Freizeitfahrzeugs erfolgen.

Weitere Vorteile und Einzelheiten der Erfindung werden anhand des in den schematischen Figuren dargestellten Ausführungsbeispiels näher erläutert. Hierbei zeigt:
- Fig. 1: eine elektrische Einrichtung eines Freizeitfahrzeugs entsprechend einem Ausführungsbeispiel in einer schematischen Darstellung;
- Fig. 2: ein Detail der in Fig. 1 gezeigten elektrischen Einrichtung entsprechend dem Ausführungsbeispiel in einer schematischen Darstellung;
- Fig. 3: die elektrische Einrichtung des Freizeitfahrzeugs entsprechend dem Ausführungsbeispiel in einer schematischen Darstellung und
- Fig. 4: ein Steuerungsmodul der elektrischen Einrichtung entsprechend dem Ausführungsbeispiel in einer schematischen Darstellung.

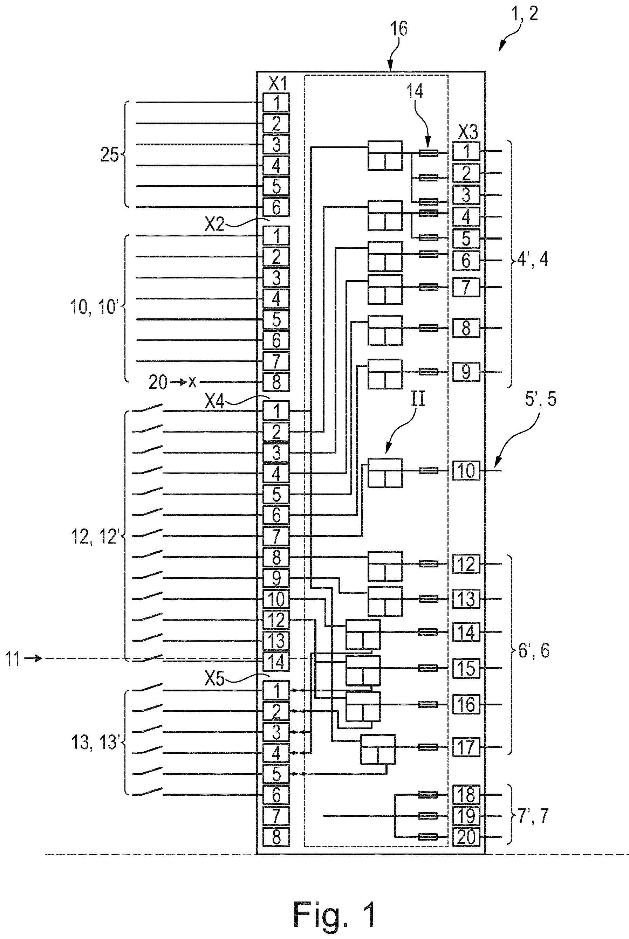

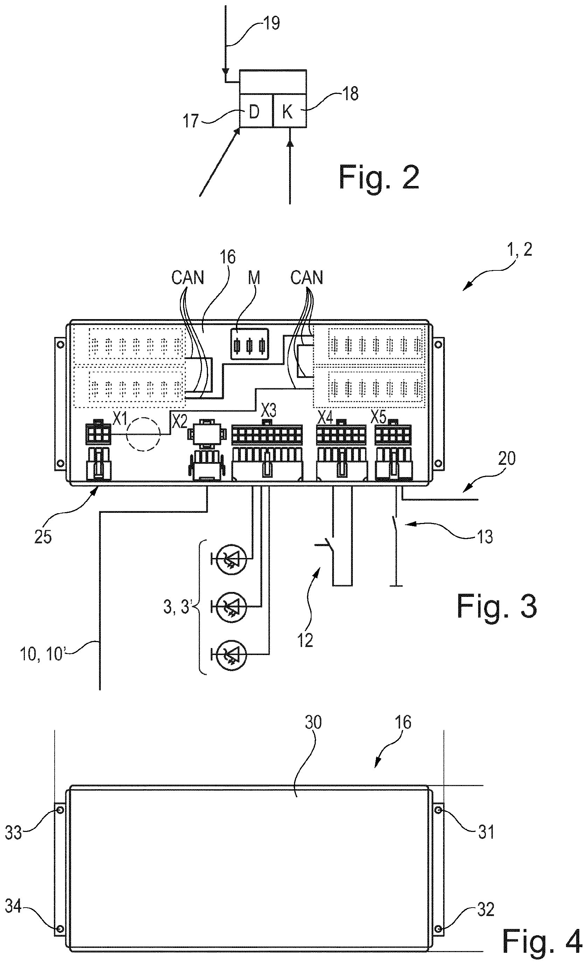

Fig. 1 bis 3 zeigen ein Freizeitfahrzeug 1 entsprechend einem Ausführungsbeispiel, das als Wohnmobil ausgebildet ist. Zur Vereinfachung der Darstellung ist hierbei im Wesentlichen eine elektrischen Einrichtung 2 dargestellt, die insbesondere für eine elektrische Innen- und/oder Außenbeleuchtung 3 des Freizeitfahrzeugs 1 dient. Im einzelnen zeigen Fig. 1 und 3 jeweils die elektrische Einrichtung 2 in einer schematischen Darstellung. Fig. 2 zeigt exemplarisch ein Detail II der in Fig. 1 gezeigten elektrischen Einrichtung 2 in einer schematischen Darstellung.

Die elektrische Einrichtung 2 umfasst mehrere Anschlussstellen 4, 5, 6, 7 und mehrere Betätigungselemente 12, 13. Außerdem ist ein zentrales Steuerungsmodul 16 vorgesehen. Das zentrale Steuerungsmodul 16 weist Versorgungsanschlüsse 10' auf, die mit Versorgungsstellen verbunden sind, an denen eine Verbindung mit einer Energiequelle, wie einer Fahrzeugbatterie, möglich ist. Ferner ist eine Zuleitung 11 für Tasterfunktionen vorgesehen. Somit können das zentrale Steuermodul 16 und die elektrische Einrichtung 2 mit Energie versorgt werden. Die realisierte Energieversorgung kann beispielsweise auf 12 Volt basieren. Die Versorgungsanschlüsse können hierbei unterschiedlich abgesichert sein, beispielsweise zwei Mal mit 10 Ampere und zwei Mal mit 15 Ampere für insgesamt vier Lichtkreise.

Das zentrale Steuerungsmodul 16 hat außerdem mehrere Eingänge 12', 13' und mehrere Ausgänge 4', 5', 6', 7'. Die Betätigungselemente 12, 13 sind in diesem Ausführungsbeispiel direkt mit den Eingängen 12', 13' des zentralen Steuerungsmoduls 16 verbunden. Ferner sind die Anschlussstellen 4, 5, 6, 7 in diesem Ausführungsbeispiel direkt mit den Ausgängen 4', 5', 6', 7' verbunden. Die Ausgänge 4', 5', 6', 7' können durch Sicherungen 14 einzeln mit jeweils 3 Ampere abgesichert sein.

Die Betätigungselemente 12 sind als Taster 12 ausgebildet, die an geeigneten Stellen im Wohnmobil angeordnet sind, so dass durch einen Benutzer eine Betätigung der Taster 12 möglich ist. Vorzugsweise sind die Taster 12 für die Innen- und/oder Außenbeleuchtung 3 vorgesehen. Beispielsweise kann das Steuerungsmodul 16 so ausgebildet sein, dass die Taster 12 für eine indirekte Frontbeleuchtung, eine Frontbeleuchtung an der Decke, eine Deckenbeleuchtung im Bad, eine Deckenbeleuchtung im Toilettenraum (WC-Raum), eine Deckenbeleuchtung am Bett, eine Beleuchtung an einem Vorzelt, ein Beleuchtung für eine Garage, insbesondere eine Heckgarage, eine Beleuchtung eines Staufachs und eine Nachtbeleuchtung dienen. Hierbei können auch zwei oder mehr Taster für die gleiche Funktion dienen. Beispielsweise können für eine Heckgarage zwei oder mehr Taster vorgesehen sein, damit sowohl an der Garage als auch im Fahrzeuginneren eine Betätigung der Beleuchtung möglich ist. Die Taster 12 können in einem Frontbereich, an einem Bad, an einer Toilette, an einem Bett, an einer Aufbautür, an einer Garage, insbesondere Heckgarage, und an einem Staufach oder an sonstigen geeigneten Stellen angeordnet sein.

Das zentrale Steuerungsmodul 16 ist so ausgebildet, dass für ein oder mehrere der Taster 12 jeweils eine Dimmfunktion 17 vorgebbar ist, wie es exemplarisch in Fig. 2 gezeigt ist. Ferner ist das zentrale Steuerungsmodul 16 als programmierbares Steuerungsmodul 16 ausgebildet. Durch eine Programmierung des Steuerungsmoduls 16 kann dann für die Ausgänge 4', 5', 6', 7' entsprechend der Dimmfunktion 17 eine Dimmkurve programmiert sein. Hierdurch ist eine Anpassung der Dimmkurve an die an den Ausgängen 4', 5', 6', 7' angeschlossenen Leuchtmittel 3 gegeben. Ferner kann über ein Signal 19 ein Ein- und Ausschalten der Dimmfunktion 17 erfolgen, so dass dann ein Aufdimmen, ein Abdimmen oder ein Auf- und Abdimmen erfolgen oder nicht erfolgen kann.

Die Betätigungselemente 13 sind als Kontaktelemente 13 ausgebildet. Hierbei weist das zentrale Steuerungsmodul 16 für die Kontaktelemente 13 jeweils eine Kontaktfunktion 18 auf, wie es in Fig. 2 veranschaulicht ist.

Die Kontaktelemente 13 können an Stauraumklappen, an Garagenklappen und gegebenenfalls an zumindest einer sonstigen Klappe, an einer Aufbautür, an zumindest einer Fahrhaustür und gegebenenfalls an zumindest einer sonstigen Tür angeordnet sein. Das zentrale Steuerungsmodul 16 erfasst entsprechend der Kontaktfunktion 18 jeweils einen offenen und/oder geschlossenen Zustand der Stauraumklappe, der Garagenklappe, gegebenenfalls der sonstigen Klappe, der Aufbautür, der Fahrhaustür und gegebenenfalls der sonstigen Tür. Beispielsweise können bei einer möglichen Ausgestaltung Kontaktelemente 13 für eine rechte Stauraumklappe, eine linke Stauraumklappe, eine rechte Garagenklappe, eine linke Garagenklappe, eine rechte Aufbautür und eine linke Fahrhaustür vorgesehen sein.

Das zentrale Steuerungsmodul 16 schaltet dann in Abhängigkeit von dem erfassten offenen und/oder geschlossenen Zustand der Stauraumklappe, der Garagenklappe, der sonstigen Klappe, der Aufbautür, der Fahrhaustür und der sonstigen Tür einen oder mehrere der Ausgänge 4', 5', 6', 7'. Zusätzlich kann das zentrale Steuerungsmodul 16 in Abhängigkeit von einer Uhrzeit zumindest einen der Ausgänge 4', 5', 6', 7' schalten.

Wie bereits am Beispiel der Garagenklappe ausgeführt, kann das zentrale Steuerungsmodul 16 zumindest einen der Ausgänge 4', 5', 6', 7' in Abhängigkeit von mehreren Betätigungselementen 12, 13 schalten. Ferner können auch mehrere Ausgänge 4', 5', 6', 7' in Abhängigkeit von zumindest einem Betätigungselement 12, 13 geschaltet werden. Drei der Ausgänge 4' können bei einer möglichen Ausgestaltung für eine indirekte Frontbeleuchtung dienen. Zwei der Ausgänge 4' können für eine Deckenbeleuchtung an der Front dienen. Weitere Ausgänge können für eine Deckenbeleuchtung in Bad, Toilette und am Bett dienen. Ferner kann ein Ausgang 4' für eine indirekte Beleuchtung am Bett dienen. Der Ausgang 5' kann für eine Vorzeltbeleuchtung dienen. Die Ausgänge 6' können bei einer möglichen Ausgestaltung zwei oder drei Mal für eine Garage, insbesondere eine Heckgarage, für ein rechtes Staufach, ein linkes Staufach, für eine von der Aufbautür abhängige Beleuchtung und drei Mal für Zusatzbeleuchtungen dienen.

Bei einer abgewandelten Ausgestaltung kann ein Teil der Anschlussstellen 4', 5', 6', 7' für Leuchtmittel dienen und ein anderer Teil der Anschlussstellen 4', 5', 6', 7' kann für elektrisch angetriebene Einrichtungen, wie beispielsweise eine Markise, einen Küchenlift, ein elektrisches Hubbett und eine verstellbare Trittstufe, dienen.

Wie in Fig. 3 veranschaulicht ist, kann außerdem eine Bus-Verbindung 25 vorgesehen sein. Die exemplarisch dargestellten Leuchtmittel 3' können beispielsweise als Staufachbeleuchtung, als Garagenbeleuchtung und als Beleuchtung für einen Wohnbereich dienen. Der exemplarisch dargestellte Taster 12 kann in einem Wohnbereich angeordnet sein. Das exemplarisch dargestellte Kontaktelement 13 kann an einer Garage, einem Staufach oder einer Aufbautür angeordnet sein. Ferner kann ein Signal eines Bewegungsmelders mittels einer Signalleitung 20 verarbeitet werden.

Fig. 4 zeigt das Steuerungsmodul 16 der elektrischen Einrichtung 2 entsprechend dem Ausführungsbeispiel in einer schematischen Darstellung. Hierbei ist das Steuerungsmodul 16 in einem Gehäuse 30 untergebracht, das beispielsweise an Bohrungen 31 bis 34 im Freizeitfahrzeug 1 befestigt wird.

Die Erfindung ist nicht auf die beschriebenen Ausführungsbeispiele beschränkt.

## Patentansprüche

1. Freizeitfahrzeug (1), insbesondere Wohnmobil oder Wohnwagen, mit einer elektrischen Einrichtung (2), die insbesondere für eine elektrische Innen- und/oder Außenbeleuchtung (3) dient, wobei die elektrische Einrichtung (2) mehrere Anschlussstellen (4, 5, 6, 7) und mehrere Betätigungselemente (12, 13) umfasst, wobei ein zentrales Steuerungsmodul (16) vorgesehen ist, wobei das zentrale Steuerungsmodul (16) mehrere Eingänge (12', 13') und mehrere Ausgänge (4', 5', 6', 7') aufweist, wobei die Betätigungselemente (12, 23) zumindest mittelbar mit den Eingängen (12', 13') des zentralen Steuerungsmoduls (16) verbunden sind und wobei die Anschlussstellen (4, 5, 6, 7) zumindest mittelbar mit den Ausgängen (4', 5', 6', 7') des zentralen Steuerungsmoduls (16) verbunden sind.

2. Freizeitfahrzeug nach Anspruch 1,
**dadurch gekennzeichnet,**
**dass** mehrere der Betätigungselemente (12) als Taster (12) ausgebildet sind, die durch einen Benutzer betätigbar sind, und dass das zentrale Steuerungsmodul (16) so ausgebildet ist, dass für ein oder mehrere der als Taster (12) ausgebildeten Betätigungselemente (12) jeweils eine Dimmfunktion (17) vorgebbar ist.

3. Freizeitfahrzeug nach Anspruch 2,
**dadurch gekennzeichnet,**
**dass** das zentrale Steuerungsmodul (16) als programmierbares Steuerungsmodul (16) ausgebildet ist und/oder dass das Steuerungsmodul (16) so ausgebildet ist, dass durch eine Programmierung des Steuerungsmoduls (16) für zumindest einen Ausgang (4', 5', 6', 7') entsprechend der Dimmfunktion (17) eine Dimmkurve programmierbar ist, die insbesondere eine Anpassung der Dimmkurve an ein an dem Ausgang angeschlossenes Leuchtmittel (3) ermöglicht.

4. Freizeitfahrzeug nach Anspruch 2 oder 3,
**dadurch gekennzeichnet,**
**dass** zumindest ein Teil der als Taster (12) ausgebildeten Betätigungselemente (12) in einem Frontbereich und/oder an einem Bad und/oder an einer Toilette und/oder an einem Bett und/oder an einer Aufbautür und/oder an einer Garage, insbesondere Heckgarage, und/oder an einem Staufach angeordnet ist.

5. Freizeitfahrzeug nach einem der Ansprüche 1 bis 4,
**dadurch gekennzeichnet,**
**dass** zumindest eines der Betätigungselemente (13) als Kontaktelement (13) ausgebildet ist und dass das zentrale Steuerungsmodul (16) so ausgebildet ist, dass für ein oder mehrere der als Kontaktelemente (13) ausgebildeten Betätigungselemente (13) jeweils eine Kontaktfunktion (18) vorgebbar ist.

6. Freizeitfahrzeug nach Anspruch 5,
**dadurch gekennzeichnet,**
**dass** zumindest ein Teil der als Kontaktelemente (13) ausgebildeten Betätigungselemente (13) an zumindest einer Stauraumklappe und/oder an einer Garagenklappe und/oder an zumindest einer sonstigen Klappe und/oder an einer Aufbautür und/oder an zumindest einer Fahrhaustür und/oder an zumindest einer sonstigen Tür angeordnet ist und dass das zentrale Steuerungsmodul (16) so ausgebildet ist, dass für ein oder mehrere der als Kontaktelemente (13) ausgebildeten Betätigungselemente (13) entsprechend der Kontaktfunktion (13) ein offener und/oder geschlossener Zustand der Stauraumklappe beziehungsweise der Garagenklappe beziehungsweise der sonstigen Klappe beziehungsweise der Aufbautür beziehungsweise der Fahrhaustür beziehungsweise der sonstigen Tür erfassbar ist.

7. Freizeitfahrzeug nach Anspruch 6,
**dadurch gekennzeichnet,**
**dass** das zentrale Steuerungsmodul (16) so ausgebildet ist, dass in Abhängigkeit von dem erfassten offenen und/oder geschlossenen Zustand der Stauraumklappe beziehungsweise der Garagenklappe beziehungsweise der sonstigen Klappe beziehungsweise der Aufbautür beziehungsweise der Fahrhaustür beziehungsweise der sonstigen Tür zumindest einer der Ausgänge (4', 5', 6', 7') schaltbar ist.

8. Freizeitfahrzeug nach einem der Ansprüche 1 bis 7,
**dadurch gekennzeichnet,**
**dass** das zentrale Steuerungsmodul (16) so ausgebildet ist, dass in Abhängigkeit von einer Uhrzeit zumindest einer der Ausgänge (4', 5', 6', 7') schaltbar ist.

9. Freizeitfahrzeug nach einem der Ansprüche 1 bis 8,
**dadurch gekennzeichnet,**
**dass** das zentrale Steuerungsmodul (16) so ausgebildet ist, dass zumindest einer der Ausgänge (4', 5', 6', 7') in Abhängigkeit von mehreren Betätigungselementen (12, 13) schaltbar ist.

10. Freizeitfahrzeug nach einem der Ansprüche 1 bis 9,
**dadurch gekennzeichnet,**
**dass** ein Teil der Anschlussstellen (4', 5', 6', 7') für Leuchtmittel dient und dass zumindest ein anderer Teil der Anschlussstellen (4', 5', 6', 7') für elektrisch angetriebene Einrichtungen, insbesondere für eine Markise und/oder einen Küchenlift und/oder ein elektrisches Hubbett und/oder eine verstellbare Trittstufe, dient.

11. Freizeitfahrzeug nach einem der Ansprüche 1 bis 10,
**dadurch gekennzeichnet,**
**dass** das zentrale Steuerungsmodul (16) eine Bus-Verbindung (25) aufweist, über die insbesondere eine Verbindung mit einem Datenbus und/oder einem mobilen Gerät ermöglicht ist.
